Europäisches Patentamt

European Patent Office

Office européen des brevets

(11) Publication number: **0 430 671 A2**

# EUROPEAN PATENT APPLICATION

(21) Application number: **90312949.2**

(22) Date of filing: **28.11.90**

(51) Int. Cl.⁵: **G06F 1/26**

(30) Priority: **01.12.89 US 443923**

(43) Date of publication of application:
**05.06.91 Bulletin 91/23**

(84) Designated Contracting States:
**DE FR GB Bulletin 2**

(71) Applicant: **International Business Machines
Corporation
Old Orchard Road
Armonk, N.Y. 10504(US)**

(72) Inventor: **Gould, Joel M.**
**24 Prescott Road**
**Norwood, MA 02062(US)**
Inventor: **Kuzawinski, Mark J.**
**Rd 2, Box 72, Bradley Creek Road**
**Johnson City, NY 13790(US)**
Inventor: **Smith, Craig D.**
**Rd 2, Box 257, Noyes Road**
**Vestal, NY 13850(US)**

(74) Representative: **Bailey, Geoffrey Alan**
**IBM United Kingdom Limited Intellectual
Property Department Hursley Park
Winchester Hampshire SO21 2JN(GB)**

(54) **Power sequencing.**

(57) A power distribution system is described which includes a power supply (10) and a plurality of connected loads (16, 18, 20). Each load has a first portion (24, 26) exhibiting substantial power consumption requirements. The first load portion includes a control circuit (26) for enabling connection to the power supply. Each load includes a processor (22) which generates a random number R that, in turn, determines a random time t within a time period m after a "power-on" signal. At time t, the processor issues a signal to the control circuit to apply power to the first portion. Accordingly, each first load portion is connected to the power supply at a random time t within the time period m, thereby enabling a randomized distribution of power sequencing to the loads attached to the power supply.

FIG. 2

## POWER SEQUENCING

This invention relates to power sequencing and, more particularly, to a method and apparatus for applying power to a plurality of independent data processing units sharing a common power source.

Many electromechanical devices exhibit a demand for current, when first activated, that is significantly in excess of steady-state operating current. When power supplies are designed for systems which include such devices, they are often sized to meet the large start-up requirements, even though that additional capacity is wasted during steady state operation. This problem is exacerbated in systems where such electromechanical devices may be replicated hundreds of times. For instance, in large parallel data processing systems, independent disk drive arrays exist where the start-up current requirements of the motors in the individual drives may exceed the steady-state current by as much as 50%. Thus, if the power supply for such a system is designed to accommodate the simultaneous power-up of all loads, it is vastly overdesigned for steady-state operation.

In order to enable use of smaller, and thus less expensive, power supplies for the above-noted types of systems, various techniques for power sequencing have been proposed in the prior art. In the IBM 9370 and in the IBM 4381 systems, power sequencing was accomplished by sequentially turning on power to succeeding modules, while allowing enough time for each individual module to reach steady state before applying power to the next module. Those systems required that each module be controlled from a central location via control circuits which communicate between the modules and the central location, in order that the module's power be applied at the appropriate time. Furthermore, separate power control circuits were required for each individual module.

In U.S. Patent 4,674,031 to Siska, Jr., the sequence in which various computer peripherals are powered is determined by the relative sensitivity of each peripheral to line voltage and switching transients, with the most sensitive peripherals being energized last and the least sensitive peripherals being energized first. A sufficient interval is provided between each sequential peripheral power-up to allow for the settling out of switching transients. Here again, individual communicating power control circuits are required for each individual peripheral unit.

In U.S. Patent 4,593,349 to Chase et al., a peripheral power control sequencer is described which incorporates a microcomputer that controls the power sequencing for a plurality of peripheral control units. The system described by Chase et al. is much the same as the above-described IBM products, in that power is supplied sequentially to a plurality of peripheral units.

In U.S. Patent 4,443,709 to Genuit et al., a predetermined power-on time interval switch is provided in each peripheral cabinet, to control the time of power application to that cabinet, after a main power source is brought up. A counter element generates a coded sequence in response to sensing that the power supply is at its desired frequency. Each cabinet includes equipment capable of recognizing one of the codes and enables the power signal to be applied to its respective cabinet upon the occurrence its code, thereby enabling cabinet powering to occur in a desired sequence.

Walberg et al., in U.S. Patent 4,233,666, describes a powering system for a plurality of data processing disk drives, each drive equipped with a microprocessor. Each disk drive has a different built-in time delay which controls its powering. Once a power-up signal is received from a central power supply, the time delay is set in motion and the power-up sequence awaits the time-out of the delay and then commences its power-up cycle. The various time delays enable each disk drive to start at a different time. The Walberg et al. system eliminates the need for independent control lines to each disk drive. On the other hand, each disk drive must be separately configured so that its microprocessor exhibits a different time delay from other disk drives connected to the power system. This system thus requires that each disk drive have a unique characteristic, which is either set in place by the user or at the factory.

Viewed from one aspect, the invention provides a power consuming apparatus connectable via a power control unit to a power supply characterised by a random number generator for controlling said power control unit to delay connection to said power supply for a random time period (t) from receipt of a signal indicating connection should be made.

A preferred embodiment of the invention is a power distribution system which includes a power supply and a plurality of connected loads. Each load has a first portion exhibiting substantial power consumption requirements. The first load portion includes a control circuit for enabling connection to the power supply. Each load includes a processor or other control circuitry which generates a random number R that, in turn, determines a random time t within a time period m after a "power-on" signal. At time t, the processor issues a signal to the control circuit to apply power to the first portion. Accordingly, each first load portion is connected to the power supply at a random time t within the time period m, thereby enabling a randomized distribution of power sequencing to the loads attached to the power supply.

An embodiment of the invention will now be described, by way of example only, with reference to the accompanying drawings in which:

Fig. 1 is a block diagram of a power distribution system for powering a plurality of data processing nodes;

Fig. 2 is a block diagram of each node;

Fig. 3 is a block diagram of a circuit at each node for generating a random number;

Fig. 4 is a high level flow diagram indicating the logical process employed at each node to enable application of power thereto.

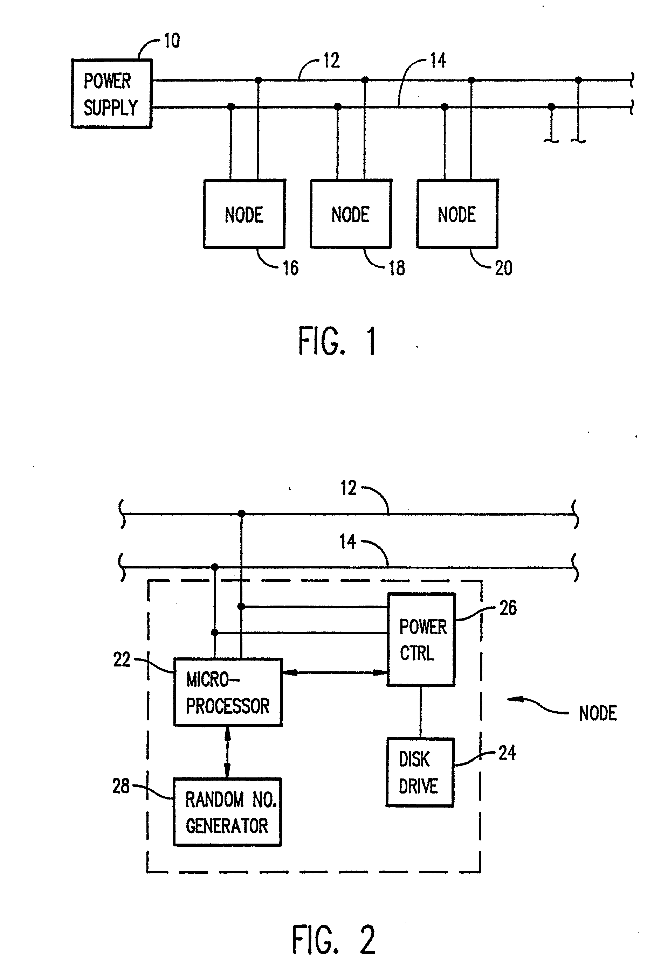

Referring now to Figs. 1 and 2, a power supply 10 is connected by a distribution lines 12 and 14 to a plurality of nodes 16, 18, 20, etc. Each node (Fig. 2) is comprised of a microprocessor 22 and an associated disk drive 24. Distribution lines 12 and 14 are connected directly to microprocessor 22, and through power control module 26 to a disk drive 24. A random number generator module 28 is connected to microprocessor 22. It is to be understood, that while this invention is described in relation to a data processing system, it is equally applicable to other systems which exhibit similar power requirement characteristics. Furthermore, each node may be thought of as a load, a portion of which exhibits heavy powering requirements (e.g. a motor), and another portion of which exhibits lesser powering requirements (e.g. electronics modules). Additionally, the terms processor and microprocessor are to be understood as applying not only to conventional processors, but also to hard wired controllers and the like.

Due to the fact that each disk drive 24 in nodes 16, 18, 20, etc. has an electric motor which requires substantial starting current, a power sequencing capability is required for the system, to enable both the cost and the power capacity of power supply 10 to be maintained at reasonable levels. The power requirements of microprocessor 22 and its associated circuitry are generally more modest than those of disk drives 24 and thus they are immediately energized when power is applied to conductors 12 and 14.

Initially, power control module 26 is in the "open" state so that power is not applied to disk drive 24. The time at which microprocessor 22 causes power control module 26 to close is controlled by random number generator 28.

When microprocessor 22 senses the application of power across distribution lines 12 and 14, random number generator is started and commences generating random numbers. After a time delay, a random number is sensed by microprocessor 22 and the resulting number is multiplied by a preset "power-up" time interval to determine the exact time at which power control module 26 will be closed to enable power to be applied to disk drive 24. It is to be noted that each node is totally independent and generates its own random number and closes its associated power control module accordingly.

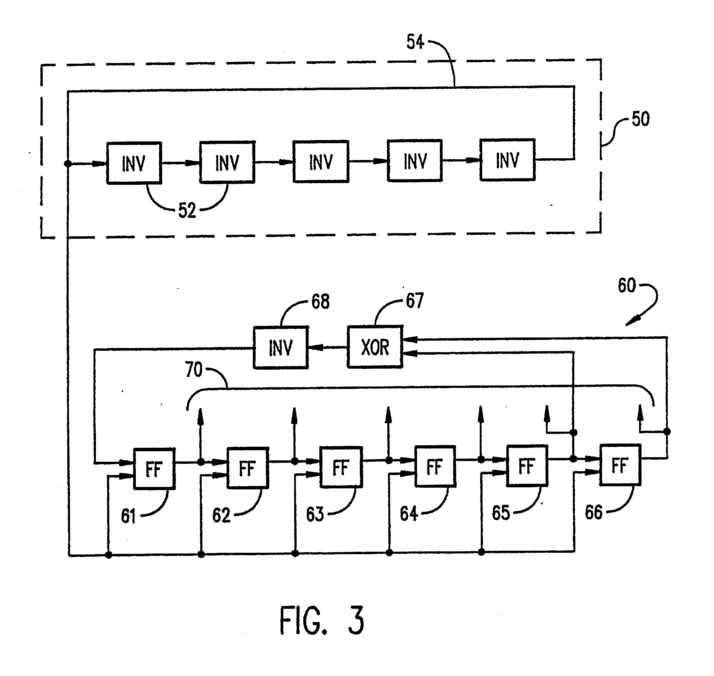

As above stated, the system uses a random time delay, computed locally at each load, to sequence the start up procedure. In this system, it is necessary to generate random time delays, given identically manufactured loads. It is an understood principle that it is not possible to generate different random numbers given absolutely identical hardware and software. To avoid, therefore, the requirement for individually characterizing each load, the randomizing system takes advantage of unintentional inherent differences between the loads. This is accomplished by realizing that certain physical features in each load, while identically manufactured, do not exhibit identical characteristics. For instance, it is known that there are subtle differences in the speeds of integrated logic due to slight process variations during the manufacture of those components. This manifestation may be utilized to enable the generation of a random number through the provision of the circuit shown in Fig. 3. An "unstable" clock 50 is comprised of a chain of an odd number of inverting logic circuits 52, with the output of the chain being connected back to its input via conductor 54. This arrangement creates an oscillator (clock) whose frequency depends on the exact propagation delays of each inverter 52. Those propagation delays are randomly distributed over a small range because of minor process variations during the construction of the inverters.

The output of unstable clock 50 is applied to a pseudo-random number generator 60 which includes a plurality of edge-triggered flip flops 61-66. The outputs of flip flops 65 and 66 are applied in parallel to exclusive OR circuit 67 whose output is in turn applied via an inverter 68 back to flip flop 61. Circuit 60, as will be apparent to those skilled in the art, is a linear feed-back shift register whose outputs 70 provide a sequence of pseudo-random numbers.

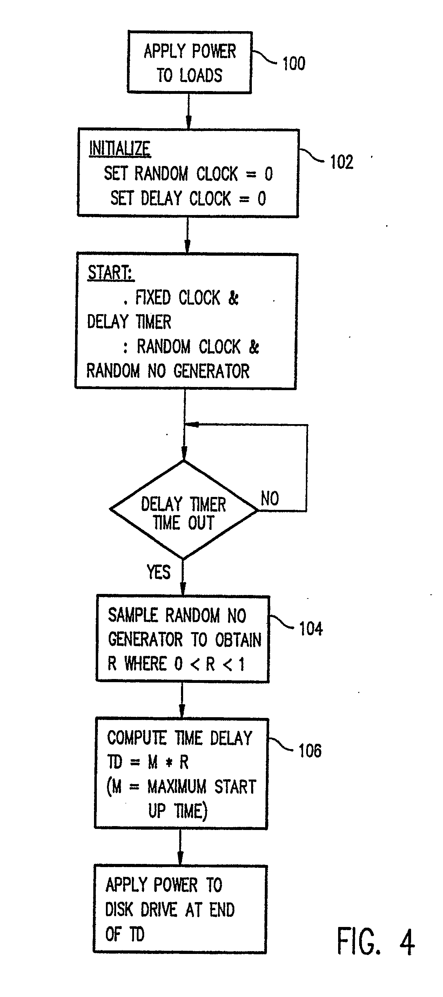

Returning now to Fig. 2 in combination with Fig. 4, the operation of the invention will be described. When power is supplied to conductors 12 and 14 initialization logic in every node becomes operative. This initialization logic is configured within microprocessor 22 and acts to reset to zero both a delay timer (not shown) within microprocessor 22 and linear feedback shift register 60 (boxes 100 and 102). Then, both unstable clock 50 and the delay timer are started. After a fixed amount of time, as determined by the delay timer, the contents of shift register 60 are sampled and used as a random number to compute a start up delay (box 104). The time delay is set to be longer than the time it takes for feedback shift register 60 to cycle through all possible values a multiple of times, given the average unstable clock frequency.

The random time delay which is determined from the count sampled from shift register 60, is determined by multiplying a maximum start up interval m by the random count R where R is interpreted as greater than 0 but less than 1 (box 106). The result of this calculation enables microprocessor 22 to close power control module 26 at a random time t within time interval m.

Thus, at each node 16, 18, 20, etc. a random time delay TD is calculated, at which point power is applied to the disk drive motor contained within the node. By virtue of the fact that each node independently calculates its random time delay TD based upon a random number generated as the result of a physical manifestation within the node, power is applied to each node in a random fashion during the time period m.

The advantages of this invention are that all load devices can be identical in both hardware and software, thus providing benefits in manufacturing costs, inventory control, field stocking, and maintenance. No external power controllers are required. The power supply can be designed with its peak current capability close to the steady state system requirement. Very little additional hardware is required at the loads, given that processors and timers are already required. The invention allows the system designer to modify the system start-up characteristics at any time during the system's development cycle without resorting to expensive and time consuming engineering changes. For example, by changing the maximum start-up time code, the designer can increase the system turn-on time to compensate for higher than expected start-up currents.

At least preferred embodiments of the invention provide a power sequencing system which requires no independent adjustment or modification of the units being powered, no independent control signals required from the power source to the individual units being powered, and which enables a power supply to be utilized whose capacity is less than the aggregate start-up power requirements for all units to which it is attached.

It should be understood that the foregoing description is only illustrative of the invention. Various alternatives and modifications can be devised by those skilled in the art without departing from the invention. Thus, while the use of variations in semiconductor devices have been described in the method for obtaining a random number, any other device with some manufacturing variability can be employed. For instance, it is known that the closure times of identically manufactured relays are not identical. Such relays could be employed to enable generation of the pseudo-random numbers. Furthermore, while a power control circuit has been shown as a separate module, it's functions may be incorporated directly into the load per se. In such a case, the load merely requires a "start" signal to commence its power-up operation. Accordingly, the present invention is intended to embrace all such alternatives, modifications and variances which fall within the scope of the appended claims.

## Claims

1. A power consuming apparatus (16, 18, 20) connectable via a power control unit (26) to a power supply (10) characterised by a random number generator (28) for controlling said power control unit to delay connection to said power supply for a random time period (t) from receipt of a signal indicating connection should be made.

2. A power consuming apparatus as claimed in claim 1, wherein a processor (22) responsive to said random number generator is used to determine said random time period from within a range of values less than a predetermined power-up time interval (m).

3. A power consuming apparatus as claimed in any of claims 1 or 2, wherein said random number generator produces random numbers (R) dependent upon manufacturing variation in said random number generator.

4. A power consuming apparatus as claimed in claim 3, wherein said random number generator includes an unstable oscillator (50) with an oscillation frequency dependent upon inverter transit times, said inverter transit times being dependent upon said manufacturing variation.

5. A power consuming apparatus as claimed in any of claims 2, 3 or 4, wherein said random number generator and said processor are directly connectable to said power supply.

6. A power consuming apparatus as claimed in any preceding claim, comprising a computer peripheral device.

7. A power consuming apparatus as claimed in claim 6, comprising a disk drive.

8. A power consuming apparatus as claimed in any preceding claim, comprising an integral unit.

9. A power consuming system including a power supply and one or more power consuming apparatuses as claimed in any preceding claim.

FIG. 1

FIG. 2

FIG. 3

```
                  ┌──────────────────┐
                  │   APPLY POWER    │ ─── 100
                  │    TO LOADS      │
                  └──────────────────┘
                           │
                           ▼
          ┌───────────────────────────────────┐
          │ INITIALIZE                         │ ─── 102
          │    SET RANDOM CLOCK = 0            │
          │    SET DELAY CLOCK = 0             │
          └───────────────────────────────────┘
                           │
                           ▼
          ┌───────────────────────────────────┐
          │ START:                             │
          │      . FIXED CLOCK &               │
          │ DELAY TIMER                        │
          │      : RANDOM CLOCK &              │
          │ RANDOM NO GENERATOR                │
          └───────────────────────────────────┘
                           │              ┌────────┐
                           ▼              │        │
                        ◇─────────◇   NO  │        │
                      ◇  DELAY TIMER ◇─────┘        │
                      ◇   TIME OUT   ◇              │
                        ◇─────────◇                 │
                           │ YES                     │
                           ▼                         │
          ┌──────────────────────────┐               │
          │ SAMPLE RANDOM NO         │ ─── 104       │
          │ GENERATOR TO OBTAIN      │               │
          │ R WHERE 0 < R < 1        │               │
          └──────────────────────────┘               │
                           │                          │
                           ▼                          │
          ┌──────────────────────────┐               │
          │ COMPUTE TIME DELAY       │ ─── 106        │
          │ TD = M * R               │                │
          │ (M = MAXIMUM START       │                │
          │        UP TIME)          │                │
          └──────────────────────────┘                │
                           │                           │
                           ▼                           │
          ┌──────────────────────────┐                │
          │ APPLY POWER TO           │                │
          │ DISK DRIVE AT END        │                │
          │ OF TD                    │                │
          └──────────────────────────┘                │
```

FIG. 4